# EUROPÄISCHE PATENTSCHRIFT

(11) **EP 3 111 506 B1**
(45) Veröffentlichungstag und Bekanntmachung des Hinweises auf die Patenterteilung: **10.04.2019**
(21) Anmeldenummer: 15705954.4
(22) Anmeldetag: 12.02.2015
(51) Int. Cl.: H01M 10/6556

(54) **VERFAHREN ZUR HERSTELLUNG EINER BAUGRUPPE AUS EINEM ENERGIESPEICHERMODUL UND EINEM KÜHLELEMENT UND BAUGRUPPE**
PROCESS FOR PRODUCING AN ASSEMBLY OF AN ENERGY STORAGE MODULE AND A COOLING ELEMENT AND ASSEMBLY OF AN ENERGY STORAGE MODULE AND A COOLING ELEMENT
PROCÉDÉ D'ASSAMBLAGE D'UNE MODULE DE STOCKAGE D'ÉNERGIE AVEC UN ÉLÉMENT DE REFROIDISSEMENT ET L'ENSEMBLE D'UNE MODULE DE STOCKAGE D'ÉNERGIE ET UN ÉLÉMENT DE REFROIDISSEMENT

(30) Priorität: 28.02.2014 DE 102014203765
(43) Veröffentlichungstag der Anmeldung: 04.01.2017
(73) Patentinhaber: Bayerische Motoren Werke Aktiengesellschaft, 80809 München (DE)
(72) Erfinder: LANDERER, Florian, 85567 Grafing (DE); BURKART, Fabian, 80796 München (DE); SIERING, Sebastian, 80333 München (DE)
(86) Internationale Anmeldenummer: PCT/EP2015/052924
(87) Internationale Veröffentlichungsnummer: WO 2015/128194

(56) Entgegenhaltungen:
- EP-A1- 2 511 922
- DE-A1-102010 005 154
- DE-A1-102011 084 536
- DE-A1-102011 102 765
- DE-A1-102011 104 433
- DE-A1-102012 205 750

## Beschreibung

Die Erfindung betrifft ein Verfahren zur Herstellung einer Baugruppe für ein Energieversorgungssystem nach dem Oberbegriff des Anspruchs 1.

Bei elektrisch betriebenen Fahrzeugen werden Energiespeichermodule eingesetzt, die jeweils mehrere zu einem Batteriezellenstapel zusammengefasste einzelne Batteriezellen enthalten. Die Batteriezellenstapel werden üblicherweise im Fertigungsprozess durch einen umlaufenden Rahmen verspannt und durch diesen in Form gehalten. Der Rahmen dient auch der Befestigung des Energiespeichermoduls an einem Gehäuse oder in einem Fahrzeug.

Um eine maximale Betriebstemperatur nicht zu überschreiten, ist eine Kühlvorrichtung erforderlich, wobei oft plattenförmige Kühlelemente eingesetzt werden, die von einem Kühlfluid durchströmt werden. Es ist bekannt, jeweils ein derartiges Kühlelement mit einem Energiespeichermodul zu einer Baugruppe zusammenzufassen. Um einen ausreichenden Wärmeübertrag vom Energiespeichermodul auf das Kühlelement zu erreichen, werden das Energiespeichermodul und das Kühlelement gegeneinander verspannt, um die Kontaktflächen möglichst großflächig in Kontakt zu halten und so den Wärmeübergang zu verbessern. Luftspalte zwischen Energiespeichermodul und dem Kühlelement sowie Unebenheiten der Kontaktflächen wirken sich dabei negativ auf den Wärmeübergang aus.

In der DE 10 2010 038 681 A1 ist beschrieben, zur Verbesserung des Wärmeübergangs zwischen dem Boden des Energiespeichermoduls und einer mit diesem in thermischem Kontakt stehenden Kühlanordnung eine elastische, Wärme leitende Beschichtung in Form einer Folie oder eines Klebers anzuordnen, die für einen Ausgleich von Unebenheiten der aneinander grenzenden Komponenten sorgt. Die zum gegenseitigen Andrücken notwendige Kraft wird von Federelementen aufgebracht, die an einem Boden der Kühlanordnung angeordnet sind und die dauerhaft eine Presskraft zwischen der Kühlanordnung und dem Energiespeichermodul erzeugen.

Die DE 10 2011 104 433 A1 zeigt eine wärmeleitende Verklebung zum Austausch von thermischer Energie zwischen einem Kühlkörper und einem Energiespeicher.

Auch die DE 10 2011 102 765 A1 beschreibt eine derartige Verbindung, wobei jedoch ein zusätzliches Gehäuse vorgesehen ist, dass der Energiespeicher und die Kühlkörper umgibt.

In der DE 10 2010 005 154 A1 sind die Batteriezellen des Energiespeichers durch Kühlplatten getrennt, wobei zwischen Kühlplatte und Batteriezelle jeweils eine Hochspannungsschutzfolie angeordnet ist. Auf einer Seite stehen die Platten gegenüber dem Batteriezellen vor. An dieser Seite ist der Energiespeicher mit einem Kühlkörper verklebt, wobei die Platten in Ausnehmungen in der Kontaktseite des Kühlkörpers hineinragen. Die Verbindung zwischen Energiespeicher und Kühlkörper erfolgt über eine Wärmeleitvergussmasse.

In der DE 10 2012 205 750 A1 und der DE 10 2011 084 536 A1 sind wechselweise Batteriezellen und Kühlkörper nebeneinander angeordnet, wobei Batteriezellen und Kühlkörper jeweils über thermisch leitfähige Klebefolien verbunden sind.

Die gattungsgemäße EP 2 511 922 A1 zeigt, einen Energiespeicher und einen Kühlkörper mittels einer beidseitig klebstoffbeschichteten Isolationsfolie zu einem Verbund zu verkleben und so zusammenzuhalten.

Ein Ausgleich von Toleranzen ist bei einigen der bekannten Systemen nur durch Verformung der einzelnen Bauteile unter Einwirkung einer möglichst hohen Anpresskraft realisierbar. Die verwendeten Spannmittel, die das Energiespeichermodul und das Kühlelement zusammenhalten, müssen entsprechend steif ausgeführt sein und eine hohe Stabilität haben, um die notwendigen hohen Spannkräfte dauerhaft aufbringen zu können.

Aufgabe der Erfindung ist es, die Herstellung einer Einheit aus Energiespeichermodul und Kühlelement zu vereinfachen sowie die resultierende Baugruppe kompakter und kostengünstiger zu gestalten.

Dies wird erfindungsgemäß mit einem Verfahren zur Herstellung einer Baugruppe für ein Energieversorgungssystem mit den Merkmalen des Anspruchs 1 erreicht. Die Klebeverbindung ist dabei so stabil und formbeständig, dass keine weiteren Mittel vorgesehen sein müssen, um das Energiespeichermodul und das Kühlelement dauerhaft, also über die Lebensdauer der Baugruppe, thermisch sowie strukturmechanisch miteinander zu verbinden.

Die beim Verpressen noch verformbare und klebende Wärmeleitschicht härtet in einer möglichen Variante vorzugsweise zu einer formstabilen Klebeverbindung aus.

Das Energiespeichermodul und das Kühlelement müssen lediglich solange miteinander verpresst werden, bis die Klebeverbindung ausreichend ausgehärtet ist, z.B. um die Baugruppe bewegen zu können. Dadurch entfallen auch zusätzliche Montageschritte, beispielsweise ein Einlegen, Zentrieren und dauerhaftes Niederhalten der einzelnen Bauteile.

Das Kühlelement ist vorzugsweise eine starre, selbst tragende Kühlplatte, in der Kühlkanäle vorgesehen sind, in denen ein Kühlfluid strömen kann. Das Kühlfluid kann ein Kühlmittel oder ein Kältemittel sein, abhängig vom verwendeten Kühlkreislauf.

Da die Klebeverbindung zwischen Energiespeichermodul und Kühlelement formstabil und selbsttragend ausgelegt ist, kann ein zusätzlicher steifer, lasttragender Spannrahmen um die Baugruppe entfallen. Zur weiteren Montage beispielsweise in einem Verbund mit weiteren Energiespeichermodulen oder in einem Fahrzeug kann der normalerweise bereits vorhandene Rahmen, mit dem die einzelnen Zellen des Energiespeichermoduls verspannt werden, verwendet werden.

Vorzugsweise werden in einem Montagerahmen jeweils eine Baugruppe aus einem Energiespeichermodul und einem Kühlelement verbaut, die einfach als Einheit auswechselbar sind, falls das Kühlelement oder das Energiespeichermodul defekt ist.

Während des Verpressens werden das Energiespeichermodul und das Kühlelement mit einer vorbestimmten Presskraft für eine vorbestimmte Presszeit gegeneinander gedrückt, wobei es ausreichen kann, wenn die Schwerkraft des Energiespeichermoduls auf die verformbare, klebende Wärmeleitschicht einwirkt. Es können jedoch auch geeignete höhere Presskräfte zum Einsatz kommen, beispielsweise, um die Verteilung des Klebstoffs zu verbessern oder bei der Verwendung von Klebstoffen, die mit einer vorbestimmten Presskraft ihre Wirkung entfalten.

Die verformbare, klebende Wärmeleitschicht wird über die gesamten Kontaktflächen zwischen Energiespeichermodul und Kühlelement aufgebracht, um eine durchgehende, flächige wärmeleitende Verbindung zu erhalten, die auf der gesamten Kontaktfläche einen gleichmäßigen hohen Wärmeübergang ermöglicht.

Die Wärmeleitschicht schafft während des Verpressens einen Ausgleich von Oberflächenunebenheiten und füllt den Raum zwischen der Kontaktseite des Kühlelements und der Kontaktseite des Energiespeichermoduls vollständig und möglichst ohne Luftspalte aus, so dass über die gesamte Kontaktfläche zwischen Energiespeichermodul und Kühlelement ein gleichmäßiger Wärmeübergang erfolgen kann.

Die Wärmeleitschicht enthält einen Wärmeleitklebstoff. Dieser sollte die Eigenschaften in sich vereinen, verformbar, klebend, hochspannungsisolierend sowie gut wärmeleitend zu sein. Außerdem sollte der Wärmeleitklebstoff formstabil und lasttragend aushärtend.

Anstelle eines Wärmeleitklebstoffs kann auch eine Wärmeleitvergussmasse verwendet werden. Diese Begriffe werden hier synonym benutzt. Vorzugsweise ist der Wärmeleitklebstoff bzw. die Wärmeleitvergussmasse flüssig genug, um die fertigungsbedingten Unebenheiten oder Toleranzen an den Kontaktseiten des Energiespeichermoduls und des Kühlelements zu umfließen. So kann die Wärmeleitvergussmasse beispielsweise auch in fertigungsbedingte Rundungen bzw. Radien an den Ecken der Batteriezellen an der Kontaktseite des Energiespeichermoduls kriechen und diese ausgleichen. Es ist somit auch nicht mehr erforderlich, die Kontaktseite des Kühlelements möglichst eben auszuführen, da produktionsbedingte Unebenheiten einfach durch die Wärmeleitschicht ausgeglichen werden können.

Beim Verpressen wird vorzugsweise die Verringerung der Dicke der Wärmeleitschicht begrenzt, so dass nach dem Verpressen die Klebeverbindung wenigstens noch eine zweite vorbestimmte Dicke aufweist. Es ist oft vorteilhaft, dafür zu sorgen, dass über die gesamte Kontaktfläche zwischen Energiespeichermodul und Kühlelement die Oberflächen dieser beiden Bauteile nicht in direkten Kontakt miteinander kommen, sondern der gesamte Wärmeübertrag stets über die Klebeverbindung erfolgt, um lokale heiße bzw. kalte Zonen zu vermeiden und Beschädigungen zu verhindern.

Über die Wärmeleitschicht lassen sich Unebenheiten der Kontaktseiten von Energiespeichermodul und/oder Kühlelement ausgleichen, indem zunächst eine Schicht des Wärmeleitklebstoffs aufgetragen und vorzugsweise geglättet wird, welche dann vor dem Verpressen ganz oder teilweise ausgehärtet wird.

Um Lufteinschlüsse zu vermeiden, kann die Wärmeleitschicht in Bahnen und/oder in einem vorbestimmten Muster aufgetragen werden, beispielsweise einem Punkt-, Streifen oder Zickzackmuster, das so ausgelegt ist, dass beim Aufeinanderpressen des Energiespeichermoduls und des Kühlelements Luft automatisch nach außen gedrückt wird und so eine Klebeverbindung ohne Lufteinschlüsse entsteht.

Konzeptbedingt werden die einzelnen Batteriezellen des Energiespeichermoduls meistens über die an einer Seite angeordneten elektrischen Anschlussterminals ausgerichtet. Hierdurch unterliegt die sich auf der gegenüberliegenden Seite der jeweiligen Batteriezelle befindliche Wärmeabfuhrzone Toleranzen, die dafür sorgen können, dass die Kontaktseite des Energiespeichermoduls nicht komplett eben ist, da die einzelnen Batteriezellen des Energiespeichermoduls an dieser Seite aufgrund der Bauteiltoleranzen gegeneinander versetzt sind. Diese und andere bauteilbedingte Toleranzen sollten über die Schichtdicke der aufgetragenen verformbaren, klebenden und wärmeleitenden Wärmeleitschicht ausgleichbar sein.

Die Dicke der Wärmeleitschicht sowie der Klebeverbindung kann so groß gewählt werden, dass die Klebeverbindung auch einen Hochspannungsschutz zwischen dem Energiespeichermodul und dem Kühlelement liefert, wenn dieser infolge der Gestaltung der Batteriezellen und der Energiespeichermodule bzw. der Verschaltung der Energiespeichermodule erforderlich ist. Der Hochspannungsschutz lässt sich dabei komplett über einen geeigneten Wärmeleitkleber oder eine geeignete Wärmeleitvergussmasse erreichen.

Erfindungsgemäß wird aber zwischen dem Energiespeichermodul und dem Kühlelement eine Hochspannungsschutzfolie insbesondere aus einem geeigneten Kunststoff, z.B. PET, angeordnet.

Die Hochspannungsschutzfolie ist dabei Teil der verformbaren und klebenden Wärmeleitschicht und kann zur Herstellung der Klebeverbindung genutzt werden, wenn sie einseitig oder doppelseitig klebend ausgebildet ist. Bei Verwendung einer doppelseitig klebenden Hochspannungsschutzfolie ist es in einer nicht von der Erfindung umfassten Variante möglich, ganz auf einen zusätzlichen Wärmeleitklebstoff zu verzichten und die Wärmeleitschicht ausschließlich über die Hochspannungsschutzfolie zu realisieren. Hier ist ein vorheriges Ausrichten der Zellen des Energiespeichermoduls an der Wärmeabfuhrzone der Zellen aufgrund des geringen Toleranzausgleichsvermögens der Hochspannungsfolie von Vorteil. Einseitig klebende Hochspannungsschutzfolien werden vorzugsweise mit einer Schicht eines Wärmeleitklebstoffs zusammen verwendet.

Beim erfindungsgemäßen Verfahrens wird eine Hochspannungsschutzfolie auf die Kontaktseite des Energiespeichermoduls oder des Kühlelements aufgebracht. Auf die Hochspannungsschutzfolie, auf das Kühlelement und/oder auf das Energiespeichermodul wird ein Wärmeleitklebstoff aufgebracht. Anschließend wird das Energiespeichermodul vor dem Aushärten des Wärmeleitklebstoffs mit dem Kühlelement verpresst, um die Klebeverbindung herzustellen. Bei der Verwendung einer einseitig klebenden Hochspannungsschutzfolie sollte die jeweilige der klebenden Seite der Hochspannungsfolie zugewandte Fläche frei von Wärmeleitklebstoff bleiben.

Die Kontaktseite des Kühlelements bzw. des Energiespeichermoduls wird vorzugsweise vorher gereinigt, um Schmutzpartikel zu entfernen, die Haftung zu verbessern und dadurch eventuelle Lufteinschlüsse zu verhindern.

Nach dem Aufkleben der Hochspannungsschutzfolie ist es vorteilhaft, deren Oberfläche zu reinigen und/oder zu aktivieren, um Lufteinschlüsse zu reduzieren und eine bessere Verbindung zum Wärmeleitklebstoff herzustellen. Die Reinigung erfolgt beispielsweise mit Reinigungs- oder Lösungsmitteln, die Verunreinigungen chemischer und mechanischer Art entfernen. Zur Aktivierung kann beispielsweise eine Plasmabehandlung vorgenommen werden, die die Haftung eines Klebstoffs verbessert. Hier wird auch gleichzeitig eine Reinigung erzielt. Die Aktivierung wird vorzugsweise nach dem Aufkleben der Folie und vor dem Aufbringen des Wärmeleitklebstoffs auf die Folie durchgeführt.

Um eine möglichst genaue Positionierung von Kühlelement und Energiespeichermodul zur Herstellung der Klebeverbindung zu erreichen, kann das Kühlelement in eine Pressvorrichtung eingebracht und in dieser über eine Positioniereinrichtung in einer vorbestimmten Position fixiert werden. Die Positioniereinrichtung kann insbesondere eine Auflagefläche aufweisen, die einer Negativform der aufliegenden Oberfläche des Kühlelements entspricht. Dies ist vor allem dann vorteilhaft, wenn die der Kontaktseite gegenüberliegende Fläche des Kühlelements beispielsweise ein Rippenmuster zur Versteifung aufweist, oder sich dort Strömungskanäle im Inneren des Kühlelements abzeichnen, so dass diese Fläche des Kühlelements nicht eben ist. Durch das Vorsehen eines Negativs der Geometrie der Oberfläche des Kühlelements wird die Kontaktfläche zwischen Zentriervorrichtung und Kühlelement maximiert, so dass Kräfte beim Verpressen gleichmäßig verteilt werden und einer ungewollten Verformung des Kühlelements entgegengewirkt wird.

Es ist vorzugsweise auch eine Positioniereinrichtung für das Energiespeichermodul vorgesehen, über die dieses in seine gewünschte Position bezüglich des Kühlelements gebracht wird. Nach dem Aufbringen der Wärmeleitschicht, dem Positionieren des Kühlelements und dem Positionieren des Energiespeichermoduls erfolgt dann das Verpressen zum Herstellen der Klebeverbindung.

Die Erfindung wird nachfolgend anhand mehrerer Ausführungsbeispiele mit Bezug auf die beigefügten Zeichnungen näher beschrieben. In den Zeichnungen zeigen:
- Figur 1 eine schematische Darstellung einer Baugruppe, die in einem erfindungsgemäßen Verfahren verklebt wird;
- Figur 2 eine schematische Draufsicht auf ein Kühlelement einer Baugruppe mit einem beispielhaften Muster einer Wärmeleitschicht vor dem Verkleben bzw. Verpressen; und
- die Figuren 3 bis 11 schematische Ansichten von Varianten einer Baugruppe mit unterschiedlicher Ausbildung einer Wärmeleitschicht, wobei die Figuren 4 und 5 nicht zur Erfindung gehörende Varianten darstellen.

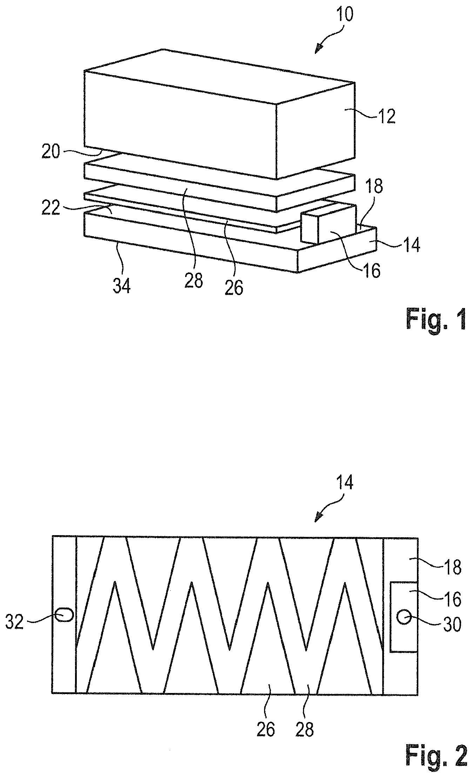

Figur 1 zeigt eine Baugruppe 10 mit einem Energiespeichermodul 12 und einem Kühlelement 14.

Das Energiespeichermodul 12 ist aus mehreren, hier nicht näher dargestellten einzelnen Batteriezellen zusammengesetzt, die elektrisch untereinander verschaltet sind.

Das Kühlelement 14 ist hier eine rechteckige Kühlplatte, in deren Inneren (nicht dargestellte) Kanäle ausgebildet sind, die von einem geeigneten Kühlfluid durchströmt werden können. Ein Fluidkupplungsflansch 16 ist in diesem Beispiel mit einer Stirnseite des Kühlelements 14 abschließend auf dessen Oberseite 18 angeordnet. Der Fluidkupplungsflansch 16 erlaubt eine Fluidverbindung zu den Kühlkanälen des Kühlelements 14 sowie eine Strömungsverbindung von Kühlelementen benachbarter Baugruppen, wenn die Baugruppe 10 in einem aus mehreren Baugruppen 10 bestehenden Gesamtspeicher oder in einem Fahrzeug verbaut ist.

Der dem Kühlelement 14 zugewandte Gehäuseteil des Energiespeichermoduls 12 besteht hier aus einem gut wärmeleitenden Material, z.B. aus Aluminium.

Das Kühlelement 14 hat die Aufgabe, im Energiespeichermodul 12 entstehende Abwärme abzuführen. Zu diesem Zweck wird das Energiespeichermodul 12 so mit dem Kühlelement 14 verbunden, dass ein großflächiger und gleichmäßiger Wärmeübertrag zwischen einer Kontaktseite 20 des Energiespeichermoduls 12 und einer Kontaktseite 22 auf der Oberseite des Kühlelements 14 zustande kommt.

Zu diesem Zweck wird eine Wärmeleitschicht 24 aus einem klebenden und gut wärmeleitenden Material zwischen den Kontaktseiten 20, 22 aufgebracht (siehe Figur 2). Die Wärmeleitschicht 24 ist hier außerdem spannungsstabil, so dass sie einen Hochspannungsschutz und eine Hochspannungsisolierung des Energiespeichermoduls 12 gegenüber dem Kühlelement 14 liefert. Außerdem ist in diesem Beispiel die Wärmeleitschicht 24 flächig ausgebildet und bedeckt die gesamte Kontaktseite 20 des Energiespeichermoduls 12.

In dem in den Figuren 1 und 2 dargestellten Beispiel besteht die Wärmeleitschicht 24 aus einer durchgehenden Hochspannungsschutzfolie 26 und einer durchgehenden Schicht 28 eines Wärmeleitklebstoffs bzw. einer Wärmeleitvergussmasse.

Die Begriffe "Wärmeleitklebstoff" und "Wärmeleitvergussmasse" werden hier synonym verwendet für Materialien, die in einem pastösen Zustand aufgetragen werden können, in dem das Material verformbar ist und eine klebende Wirkung hat, und die nach einem Aushärtvorgang zu einer formstabilen, im Wesentlichen starren Masse erstarren, die zwei miteinander zu verklebenden Komponenten sicher aneinander befestigt, wobei im ausgehärteten Zustand eine gute Wärmeleitfähigkeit gegeben ist.

Die Hochspannungsschutzfolie besteht hier aus einem hochspannungssicheren Kunststoff.

Zur Verbindung des Energiespeichermoduls 12 mit dem Kühlelement 14 wird in einer ersten Variante zunächst die Kontaktseite 22 des Kühlelements 14 gereinigt, um chemische und mechanische Verunreinigungen zu entfernen. Dann wird die Hochspannungsschutzfolie 26, die hier einseitig klebend ausgeführt ist, auf die Kontaktseite 22 des Kühlelements 14 aufgeklebt. Anschließend wird die Oberseite der Hochspannungsschutzfolie 26 gereinigt und in einem Plasmaverfahren aktiviert, um die Haftung des Wärmeleitklebstoffs 28 zu verbessern. Dann wird Wärmeleitklebstoff 28 in einem vorbestimmten Muster, hier einem Zickzackmuster, in einer bestimmten Dicke aufgetragen. Das so vorbereitete Kühlelement 14 ist in Figur 2 dargestellt.

Das Kühlelement 14 wird jetzt in einer nicht näher dargestellte Pressvorrichtung eingesetzt, in der eine (nicht dargestellte) Positioniereinrichtung mit zwei Positionierstiften vorgesehen ist, die durch zwei nahe der beiden Stirnseiten des Kühlelements 14 angeordnete Öffnungen 30, 32 hindurch greifen. Die Öffnung 30, rechts in Fig. 2, ist als Rundloch passgenau für den (nicht dargestellten) Positionierstift ausgebildet, während die Öffnung 32, die links in Fig. 2 gezeigt ist, als Langloch ausgebildet ist, um Längentoleranzen im Kühlelement 14 ausgleichen zu können.

Energiespeichermodul 12 und Kühlelement 14 weisen in einer (nicht dargestellten) Variante Zentrierstrukturen, beispielsweise in Form einer Nut-Feder-Verbindung, auf, die eine Selbstzentrierung beim Zusammenfügen dieser beiden Bauteile zur Folge haben.

Die Auflagefläche der Pressvorrichtung, auf der die Unterseite 34 des Kühlelements 14 aufgelegt wird, ist in ihrer Form komplementär zur Form der Unterseite 34 des Kühlelements 14 gestaltet, um eine möglichst gute Flächenpassung zu liefern (nicht gezeigt).

In einem nächsten Schritt wird nun das Energiespeichermodul 12 ebenfalls in die Pressvorrichtung eingesetzt. Diese weist eine (nicht dargestellte) zweite Positioniereinrichtung auf, die beispielsweise zwei Positionierstifte enthält, die in (nicht gezeigte) Öffnungen des Energiespeichermoduls eingreifen und dieses relativ zum Kühlelement 14 positionieren. Die Positionieröffnungen im Energiespeichermodul 12 können in einem (nicht dargestellten) Rahmen vorgesehen sein, der die einzelnen Zzellen des Energiespeichermoduls 12 zusammenhält, wie dies herkömmlich bekannt ist. Es ist möglich, dass sich die Positionieröffnungen des Energiespeichermoduls 12 mit denen des Kühlelements 14 decken, dies ist aber nicht zwingend erforderlich.

Energiespeichermodul 12 und Kühlelement 14 werden nun miteinander verpresst, wobei die Pressvorrichtung eine vorbestimmte Presskraft für eine vorbestimmte Zeit ausübt. Aufgrund der Presskraft verteilt sich der in Bahnen aufgebrachte Wärmeleitklebstoff 28 über die gesamte Kontaktseite 20 des Energiespeichermoduls 12 und bedeckt die gesamte Oberfläche der Hochspannungsschutzfolie 26. Der zickzackförmige Auftrags sorgt dafür, dass die Luft zwischen den beiden Bauteilen seitlich nach außen herausgedrückt wird, sodass sich keine Lufteinschlüsse bilden.

Ein Toleranzausgleich zwischen den Flächen der Kontaktseiten 20, 22 des Energiespeichermoduls 12 und des Kühlelements 14 ergibt sich automatisch beim Verpressen durch eine entsprechende Verteilung des Wärmeleitklebstoffs 28.

Die Pressvorrichtung überwacht beispielsweise den Pressvorgang so, dass der Wärmeleitklebstoff 28 nach Abschluss des Pressvorgangs eine vorbestimmte zweite Dicke aufweist, die noch so groß ist, dass die Hochspannungsschutzfolie 26 an jeder Stelle mit Wärmeleitklebstoff 28 bedeckt ist. Die Schichtdicke ist dabei so gewählt, dass Beschädigungen der Hochspannungsschutzfolie 26 im späteren Betrieb ausgeschlossen sind.

Eine ausreichende Dicke der Klebstoffschicht kann auch durch die Verwendung von Abstandshaltern sichergestellt werden, die den Weg in Pressrichtung begrenzen, oder durch das Einstellen einer geeigneten Presskraft.

Nach Abschluss des Verpressens und eventuell eines teilweisen Aushärtens des Wärmeleitklebstoffs 28 wird die Baugruppe 10 aus der Pressvorrichtung entnommen, wobei das Energiespeichermodul 12 nun über die Klebeverbindung fest und dauerhaft mit dem Kühlelement 14 verbunden ist.

Die Baugruppe 10 kann dann z.B. in einer größeren Baueinheit mit weiteren Energiespeichermodulen 12 verbaut werden oder in ein Fahrzeug eingesetzt werden. Zur Befestigung wird in diesem Beispiel der die Zellen des Energiespeichermoduls 12 umgebende Rahmen genutzt..

Zum Austausch einer Baugruppe 10 wird diese zusammen mit dem Montagerahmen aus dem Fahrzeug entnommen und eine neue Baugruppe 10 eingebaut.

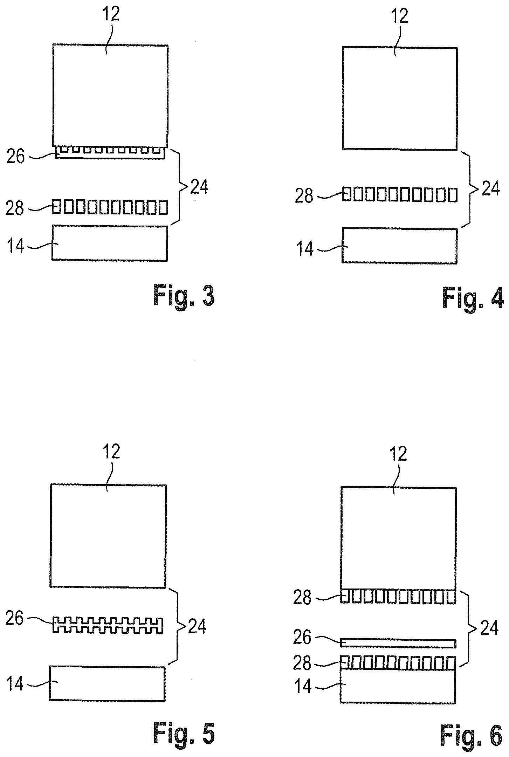

Die Figuren 3 bis 10 zeigen verschiedene Varianten der oben beschriebenen Baugruppe 10, bei denen jeweils die Wärmeleitschicht 24 unterschiedlich gestaltet ist. Aus Gründen der Übersichtlichkeit wird dennoch immer das Bezugszeichen 24 für die Wärmeleitschicht beibehalten.

Figur 3 zeigt eine Variante, bei der der Wärmeleitklebstoff 28 auf das Kühlelement 14 aufgetragen wird, während die Hochspannungsschutzfolie 26 auf die Kontaktseite 20 des Energiespeichermoduls 12 aufgeklebt wird. Diese Variante ist vorteilhaft, wenn die Kontaktseite 22 des Kühlelements 14 infolge konstruktiver, fertigungs- oder steifigkeitsbedingter Umstände nicht eben ausgeführt werden kann und so die Unebenheiten der Kontaktfläche 22 durch eine dicke Schicht des Wärmeleitklebstoffs 28 ausgeglichen werden können. In diesem Fall ist es vorteilhaft, wenn die einzelnen Batteriezellen des Energiespeichermoduls 12 an ihrer Wärmeabfuhrseite, die die Kontaktseite 20 bildet, ausgerichtet werden, um die Kontaktseite 20 möglichst eben zu gestalten.

In einer möglichen Abwandlung dieses Verfahrens wird der Wärmeleitklebstoffs 28 aufgetragen und zu einer glatten Oberfläche verstrichen und dann ganz oder teilweise ausgehärtet. In diesem Fall wird vorzugsweise eine doppelseitig klebende Hochspannungsschutzfolie 26 verwendet, um die Klebeverbindung zu vervollständigen (nicht näher dargestellt).

Bei Verwendung eines entsprechenden geeigneten Wärmeleitklebstoffs 28, der in einer ausreichend dicken Schicht auf dem Kühlelement 14 oder dem Energiespeichermodul 12 aufgetragen wird, kann in einer nicht zur Erfindung gehörenden Variante auf die Verwendung einer zusätzlichen Hochspannungsschutzfolie verzichtet werden. Die Wärmeleitschicht 24 besteht dann ausschließlich aus dem Wärmeleitklebstoff 28. Dies ist in Figur 4 dargestellt.

Umgekehrt ist es auch möglich, in einer ebenfalls nicht zur Erfindung gehörenden Variante bei Verwendung einer Hochspannungsschutzfolie 26, die geeignet ist, Unebenheiten in den Kontaktseiten 20, 22 auszugleichen, die Wärmeleitschicht 24 nur aus der Hochspannungsschutzfolie 26 auszubilden und auf die Verwendung eines zusätzlichen Wärmeleitklebstoffs zu verzichten. In diesem Fall ist dann die Hochspannungsschutzfolie 26 doppelseitig klebend ausgebildet, um die Klebeverbindung zwischen Energiespeichermodul 12 und Kühlelement 14 herzustellen. Dies zeigt Figur 5. Hier bietet es sich an, die Zellen des Energiespeichermoduls 12 an der Kontaktseite 20 auszurichten.

Es ist auch möglich, auf die Kontaktseiten 20, 22 des Energiespeichermoduls 12 und des Kühlelements 14 zunächst eine Schicht des Wärmeleitklebstoffs 28 aufzutragen, um Oberflächenunebenheiten auszugleichen und diese Schicht dann ganz oder teilweise auszuhärten. Zwischen die Schichten des Wärmeleitklebstoffs 28 wird dann eine Hochspannungsschutzfolie 26 gelegt. Es kann entweder eine doppelseitig klebende Hochspannungsschutzfolie 26 verwendet werden, oder der Wärmeleitklebstoff 28 kann nur soweit ausgehärtet werden, dass er zwar bereits im Wesentlichen formstabil, aber noch gut klebend ist. Dann kann auf eine Klebewirkung der Hochspannungsschutzfolie 26 verzichtet werden. Dies ist in Fig. 6 dargestellt.

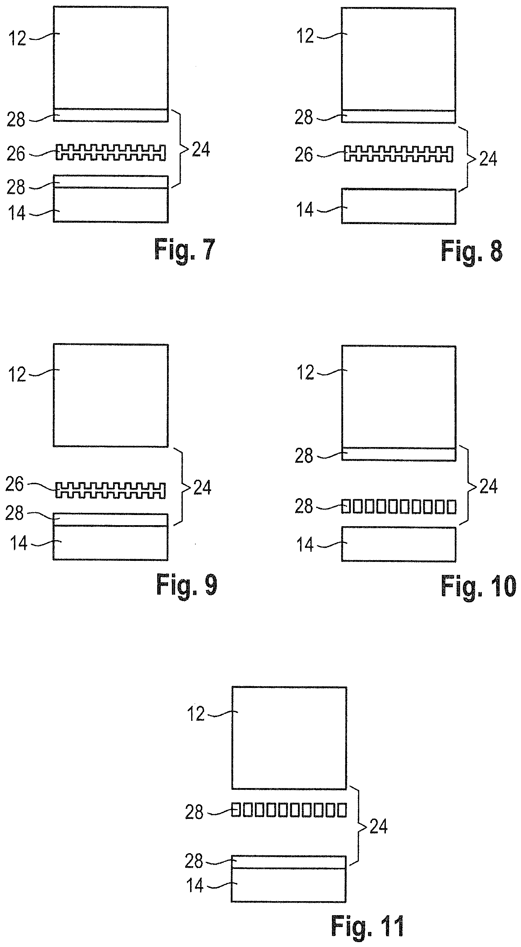

Fig. 7 zeigt eine Variante, bei der sowohl auf der Kontaktseite 20 des Energiespeichermoduls 12 als auch auf der Kontaktseite 22 des Kühlelements 14 eine Schicht des ganz oder teilweise ausgehärteten Wärmeleitklebstoffs 28 aufgebracht und zwischen den Klebstoffschichten eine doppelseitig klebende Hochspannungsschutzfolie 26 angeordnet ist.

Figur 8 zeigt eine Version, bei der nur an der Kontaktseite 20 des Energiespeichermoduls 12 eine Schicht ganz oder teilweise ausgehärteten Wärmeleitklebstoffs 28 vorgesehen ist, während eine doppelseitig klebende Hochspannungsschutzfolie 26 mit der Kontaktseite 22 des Kühlelements 14 verklebt ist. Fig. 9 zeigt die umgekehrte Version, bei der die doppelseitig klebende Hochspannungsschutzfolie 26 mit dem Energiespeichermodul 12 verklebt ist und die ganz oder teilweise ausgehärtete Schicht des Wärmeleitklebstoffs 28 auf das Kühlelement 14 aufgetragen wird.

Die in den Figuren 10 und 11 gezeigten Varianten kombinieren jeweils eine ganz oder teilweise ausgehärtete Schicht Wärmeleitklebstoffs 28 entweder auf der Kontaktseite 22 des Kühlelements 14 oder der Kontaktseite 20 des Energiespeichermoduls 12 (Figuren 10 bzw. 11) mit einer noch verformbaren, nicht ausgehärteten Schicht Wärmeleitklebstoffs 28 am jeweils anderen Bauteil. Auch hier werden Unebenheiten entweder in der Kontaktseite 20 des Kühlelements 14 oder in der Kontaktseite 22 des Energiespeichermoduls 12, beispielsweise aufgrund der Toleranzen dessen einzelner Batteriezellen, durch die zusätzliche Klebstoffschicht ausgeglichen. Außerdem wird so eine definierte Dicke der Klebstoffschicht sichergestellt, die mit einer vorbestimmten Spannungsfestigkeit einhergeht. Es ist möglich, nach dem Auftragen und Aushärten des Wärmeleitklebstoffs 28 vor weiteren Arbeitsschritten die Spannungsfestigkeit zu prüfen und gegebenenfalls die Dicke der Klebstoffschicht zu korrigieren.

In diesen Beispielen wurde eine zusätzliche Hochspannungsschutzfolie 26 weggelassen, diese ist aber erfindungsgemäß vorgesehen.

Auch weitere Abwandlungen der beschriebenen Verfahren sind natürlich im Ermessen des Fachmanns möglich.

## Patentansprüche

1. Verfahren zur Herstellung einer Baugruppe (10) für ein Energieversorgungssystem, mit einem Energiespeichermodul (12) und einem plattenförmigen Kühlelement (14), wobei zwischen einer Kontaktseite (20) des Energiespeichermoduls (12) und einer Kontaktseite (22) des Kühlelements (14) über die gesamten Kontaktflächen zwischen Energiespeichermodul (12) und Kühlelement (14) eine verformbare, klebende Wärmeleitschicht (24) aufgebracht wird, wobei die Wärmeleitschicht (24) aus einer durchgehenden einseitig, doppelseitig oder nicht klebenden Hochspannungsschutzfolie (26) und zumindest einer durchgehenden Schicht eines Wärmeleitklebstoffs (28) oder einer Wärmeleitvergussmasse besteht, **dadurch gekennzeichnet, dass**
eine Schicht des Wärmeleitklebstoffs (28) oder der Wärmeleitvergussmasse auf die Kontaktseiten (20, 22) von Energiespeichermodul (12) und Kühlelement (14) aufgetragen wird, die teilweise ausgehärtet wird, wobei die teilweise ausgehärtete Schicht soweit ausgehärtet ist, dass sie bereits formstabil, aber noch klebend ist, wobei eine nicht klebende Hochspannungsschutzfolie (26) zwischen die Schichten gelegt wird, oder
eine Schicht des Wärmeleitklebstoffs (28) oder der Wärmeleitvergussmasse auf die Kontaktseiten (20, 22) von Energiespeichermodul (12) und Kühlelement (14) aufgetragen wird, die ganz ausgehärtet wird, wobei die Hochspannungsschutzfolie (26) doppelseitig klebend ist, oder
eine Schicht des Wärmeleitklebstoffs (28) oder der Wärmeleitvergussmasse nur auf die Kontaktseite (20) des Energiespeichermoduls (12) aufgetragen wird, die ganz ausgehärtet wird, und die Hochspannungsfolie (26) doppelseitig klebend ist und mit der Kontaktseite (22) des Kühlelements (14) verklebt ist, oder
eine Schicht des Wärmeleitklebstoffs (28) oder der Wärmeleitvergussmasse nur auf die Kontaktseite (22) des Kühlelements (14) aufgetragen wird, die ganz ausgehärtet wird, und die Hochspannungsfolie (26) doppelseitig klebend ist und mit der Kontaktseite (20) des Energiespeichermoduls (12) verklebt ist, oder
eine Schicht des Wärmeleitklebstoffs (28) oder der Wärmeleitvergussmasse auf die Kontaktseite (20, 22) des Energiespeichermoduls (12) oder des Kühlelements (14) aufgetragen wird, die ganz ausgehärtet wird, und eine noch verformbare, nicht ausgehärtete Schicht des Wärmeleitklebstoffs (28) oder der Wärmeleitvergussmasse auf die Kontaktseite (22, 20) des Kühlelements (14) oder des Energiespeichermoduls (12) aufgetragen wird, wobei die Hochspannungsfolie (26) zwischen den beiden Schichten des Wärmeleitklebstoffs (28) oder der Wärmeleitvergussmasse liegt
und anschließend das Energiespeichermodul (12) und das Kühlelement (14) miteinander verpresst werden, wobei über die Wärmeleitschicht (24) eine formstabile Klebeverbindung zwischen dem Energiespeichermodul (12) und dem Kühlelement (14) hergestellt wird, die das Energiespeichermodul (12) dauerhaft mit dem Kühlelement (14) verbindet.

2. Verfahren nach Anspruch 1, **dadurch gekennzeichnet, dass** die Baugruppe (10) aus Energiespeichermodul (12) und Kühlelement (14) in einen Montagerahmen zur Montage an einem Fahrzeug eingesetzt wird.

3. Verfahren nach einem der vorhergehenden Ansprüche, **dadurch gekennzeichnet, dass** beim Verpressen die Verringerung die Dicke der verformbaren, klebenden, wärmeleitenden Wärmeleitschicht (24) begrenzt wird, sodass nach dem Verpressen die Klebeverbindung wenigstens noch eine zweite vorbestimmte Dicke aufweist.

4. Verfahren nach einem der vorhergehenden Ansprüche, **dadurch gekennzeichnet, dass** die Hochspannungsschutzfolie (26) auf die Kontaktseite (20) des Energiespeichermoduls (12) oder des Kühlelements (14) aufgebracht wird und auf die Hochspannungsschutzfolie (26), auf das Kühlelement (14) und/oder auf das Energiespeichermodul (12) ein Wärmeleitklebstoff (28) aufgebracht wird, bevor das Energiespeichermodul (12) und das Kühlelement (14) miteinander verpresst werden.

5. Verfahren nach einem der vorhergehenden Ansprüche, **dadurch gekennzeichnet, dass** die Oberfläche der Hochspannungsschutzfolie (26) gereinigt und/oder aktiviert wird.

6. Verfahren nach einem der vorhergehenden Ansprüche, **dadurch gekennzeichnet, dass** das Kühlelement (14) in eine Pressvorrichtung eingebracht und in dieser über eine Positioniereinrichtung in einer vorbestimmten Position fixiert wird, wobei die Positioniereinrichtung insbesondere eine Auflagefläche aufweist, die einer Negativform der aufliegenden Oberfläche des Kühlelements (14) entspricht.

## Claims

1. A method for producing an assembly (10) for an energy supply system, with an energy storage module (12) and a plate-shaped cooling element (14), wherein a deformable, adhesive heat-conducting layer (24) is applied between a contact side (20) of the energy storage module (12) and a contact side (22) of the cooling element (14) over the entire contact faces between the energy storage module (12) and cooling element (14), wherein the heat-conducting layer (24) comprising a continuous high-voltage protective film (26) which is adhesive on one side, on both sides or is non-adhesive and at least one continuous layer of a heat-conducting adhesive (28) or a heat-conducting casting compound, **characterised in that**
a layer of the heat-conducting adhesive (28) or of the heat-conducting casting compound is applied to the contact sides (20, 22) of the energy storage module (12) and cooling element (14), which layer is partially cured, the partially cured layer being cured to such an extent that it is already dimensionally stable, but still adhesive, with a non-adhesive high-voltage protective film (26) being placed between the layers, or
a layer of the heat-conducting adhesive (28) or of the heat-conducting casting compound is applied to the contact sides (20, 22) of the energy storage module (12) and cooling element (14), which layer is completely cured, the high-voltage protective film (26) being adhesive on both sides, or
a layer of the heat-conducting adhesive (28) or of the heat-conducting casting compound is applied only to the contact side (20) of the energy storage module (12), which layer is completely cured, and the high-voltage film (26) is adhesive on both sides and is glued to the contact side (22) of the cooling element (14), or
a layer of the heat-conducting adhesive (28) or of the heat-conducting casting compound is applied only to the contact side (22) of the cooling element (14), which layer is completely cured, and the high-voltage film (26) is adhesive on both sides and is glued to the contact side (20) of the energy storage module (12), or
a layer of the heat-conducting adhesive (28) or of the heat-conducting casting compound is applied to the contact side (20, 22) of the energy storage module (12) or of the cooling element (14), which layer is completely cured, and a still-deformable, non-cured layer of the heat-conducting adhesive (28) or of the heat-conducting casting compound is applied to the contact side (22, 20) of the cooling element (14) or of the energy storage module (12), the high-voltage film (26) lying between the two layers of the heat-conducting adhesive (28) or of the heat-conducting casting compound,
and then the energy storage module (12) and the cooling element (14) are pressed together, with a dimensionally stable adhesive connection being produced between the energy storage module (12) and the cooling element (14) by means of the heat-conducting layer (24), which connection connects the energy storage module (12) permanently to the cooling element (14).

2. A method according to Claim 1, **characterised in that** the assembly (10) comprising the energy storage module (12) and the cooling element (14) is inserted into an installation frame for mounting on a vehicle.

3. A method according to one of the preceding claims, **characterised in that** upon the pressing the reduction of the thickness of the deformable, adhesive, thermally conductive heat-conducting layer (24) is limited, so that after the pressing the adhesive connection at least still has a second predetermined thickness.

4. A method according to one of the preceding claims, **characterised in that** the high-voltage protective film (26) is applied to the contact side (20) of the energy storage module (12) or of the cooling element (14), and a heat-conducting adhesive (28) is applied to the high-voltage protective film (26), to the cooling element (14) and/or to the energy storage module (12), before the energy storage module (12) and the cooling element (14) are pressed together.

5. A method according to one of the preceding claims, **characterised in that** the surface of the high-voltage protective film (26) is cleaned and/or activated.

6. A method according to one of the preceding claims, **characterised in that** the cooling element (14) is introduced into a pressing device and is fixed in a predetermined position therein by means of a positioning means, the positioning means having especially a supporting surface which corresponds to a negative form of the surface of the cooling element (14) lying thereon.

## Revendications

1. Procédé d'obtention d'un assemblage (10) destiné à un système d'alimentation en énergie comprenant un module accumulateur d'énergie (12) et un élément de refroidissement en forme de plaque (14), entre une face de contact (20) du module accumulateur d'énergie (12) et une face de contact (22) de l'élément de refroidissement (14), sur la totalité des surfaces de contact du module accumulateur d'énergie (12) et de l'élément de refroidissement (14) étant appliquée une couche thermiquement conductrice adhésive déformable (24), constituée par un film de protection contre les hautes tensions (26) continue adhésive d'un côté, des deux côtés ou non adhésive et par au moins une couche continue d'un adhésif thermiquement conducteur (28) ou d'une masse coulée thermiquement conductrice,
**caractérisé en ce qu'**
on applique sur les faces de contact (20, 22) du module accumulateur d'énergie (12) et de l'élément de refroidissement (14) une couche du matériau thermiquement conducteur (28) ou de la masse coulée thermiquement conductrice, qui est partiellement durcie, cette couche partiellement durcie étant suffisamment durcie pour qu'elle ait déjà une forme stable mais soit encore adhésive, un film de protection contre les hautes tensions (26) non adhésif étant posé entre les couches, ou
on applique sur les faces de contact (20, 22) du module accumulateur d'énergie (12) et de l'élément de refroidissement (14) une couche du matériau thermiquement conducteur (28) ou de la masse coulée thermiquement conductrice, qui est totalement durcie, le film de protection contre les hautes tensions (26) étant adhésif des deux côtés, ou
on n'applique une couche du matériau thermiquement conducteur (28) ou de la masse coulée thermiquement conductrice que sur la face de contact (20) du module accumulateur d'énergie (12) qui est totalement durcie, et le film de protection contre les hautes tensions (26) est adhésif des deux côtés et collé avec la face de contact (22) de l'élément de refroidissement (14), ou
on n'applique une couche du matériau thermiquement conducteur (28) ou de la masse coulée thermiquement conductrice que sur la face de contact (22) de l'élément de refroidissement (14), qui est totalement durcie, et le film de protection contre les hautes tensions (26) est adhésif des deux côtés et collé avec la face de contact (20) du module accumulateur d'énergie (12), ou
on applique sur la face de contact (20, 22) du module accumulateur d'énergie (12) ou de l'élément de refroidissement (14) une couche du matériau thermiquement conducteur (28) ou de la masse coulée thermiquement conductrice qui est totalement durcie, et l'on applique sur la face de contact (22, 20) de l'élément de refroidissement (14) ou du module accumulateur d'énergie (12) une couche encore déformable et non durcie du matériau thermiquement conducteur (28) ou de la masse coulée thermiquement conductrice, le film de protection contre les hautes tensions (26) étant positionné entre les deux couches du matériau thermiquement conducteur (28) ou de la masse coulée thermiquement conductrice, puis
on comprime le module accumulateur d'énergie (12) et l'élément de refroidissement (14), et l'on obtient par l'intermédiaire de la couche thermiquement conductrice (24) une liaison par collage de forme stable entre le module accumulateur d'énergie (12) et l'élément de refroidissement (14) qui permet de lier de façon permanente le module accumulateur d'énergie (12) avec l'élément de refroidissement (14).

2. Procédé conforme à la revendication 1,
**caractérisé en ce que**
l'assemblage (10) constitué par le module accumulateur d'énergie (12) et l'élément de refroidissement (14) est inséré dans un cadre de montage pour permettre son montage dans un véhicule.

3. Procédé conforme à l'une des revendications précédentes,
**caractérisé en ce que**
lors de la compression la diminution de l'épaisseur de la couche thermiquement conductrice déformable et adhésive (24) est limitée de sorte que, après la compression, la liaison par collage ait au moins encore une seconde épaisseur prédéfinie.

4. Procédé conforme à l'une des revendications précédentes,
**caractérisé en ce que**
le film de protection contre les hautes tensions (26) est appliqué sur la face de contact (20) du module accumulateur d'énergie (12) ou de l'élément de refroidissement (14), et un adhésif thermiquement conducteur (28) est appliqué sur le film de protection contre les hautes tensions (26), sur l'élément de refroidissement (14) et/ou sur le module accumulateur d'énergie (12) avant que le module accumulateur d'énergie (12) et l'élément de refroidissement (14) aient été comprimés l'un avec l'autre.

5. Procédé conforme à l'une des revendications précédentes,
**caractérisé en ce que**
la surface du film de protection contre les hautes tensions (26) est nettoyée et/ou activée.

6. Procédé conforme à l'une des revendications précédentes,
**caractérisé en ce que**
l'élément de refroidissement (14) est introduit dans un dispositif de compression, et est fixé dans celui-ci dans une position prédéfinie par l'intermédiaire d'un dispositif de positionnement, le dispositif de positionnement comportant en particulier une surface d'appui qui correspond à la forme négative de la surface de l'élément de refroidissement (14) à appliquer.
